# EUROPÄISCHE PATENTSCHRIFT

(11) **EP 2 302 080 B1**
(45) Veröffentlichungstag und Bekanntmachung des Hinweises auf die Patenterteilung: **31.10.2012**
(21) Anmeldenummer: 10009599.1
(22) Anmeldetag: 15.09.2010
(51) Int. Cl.: C21C 5/52, F27D 21/00, F27D 19/00

(54) **Verfahren und Vorrichtung zur Steuerung der Erzeugung einer Schaumschlacke in einer metallischen Schmelze**
Method and device for controlling the generation of a foam slag in a metallic molten mass
Procédé et dispositif de commande de la production d'une scorie moussée dans une fusion métallique

(30) Priorität: 29.09.2009 DE 102009043639
(43) Veröffentlichungstag der Anmeldung: 30.03.2011
(73) Patentinhaber: SMS Siemag Aktiengesellschaft, 40237 Düsseldorf (DE)
(72) Erfinder: Reichel, Johann, 40489 Düsseldorf (DE)
(74) Vertreter: Klüppel, Walter

(56) Entgegenhaltungen:
- EP-A1- 0 180 741
- DE-B3-102005 034 409
- JP-A- 11 326 206
- US-A- 6 004 504
- US-A1- 2002 040 623
- US-B1- 6 264 716

## Beschreibung

Die vorliegende Erfindung betrifft ein Verfahren und eine Vorrichtung zur Steuerung der Erzeugung einer Schaumschlacke in einer metallischen Schmelze.

Die vorliegende Erfindung betrifft insbesondere ein Verfahren zur Schaumschlackensteuerung einer Stahlschmelze in einem Elektrolichtbogenofen.

Der metallischen Schmelze wird in einem Elektrolichtbogenofen ein Gemisch zugegeben, das zumindest ein Metalloxid und Kohlenstoff enthält. Das Gemisch reagiert chemisch im Bereich zwischen der metallischen Schmelze und der Schlackenschicht, wenn es dort eingebracht wird. Dabei setzt ein Reduktionsvorgang des Metalloxids ein. Beim Reduktionsvorgang des Metalloxids mit dem Kohlenstoff entsteht Kohlenmonoxid (CO). CO ruft eine Blasenbildung hervor und schäumt die Schlacke auf.

Beim Betreiben eines Elektrolichtbogenofens wird die Charge, wie der einzuschmelzende Schrott, im Ofen mittels des Elektrolichtbagens der Elektroden geschmolzen. Die Primärfunktion der Schaumschlacke liegt in der Entfemung von unerwünschte Bestandteilen aus der metallischen Schmelze. Die Schaumschlacke erfüllt aufgrund des geschäumten Zustands daneben eine Schutzfunktion. Die Schaumschlacke füllt den Raum zwischen den Enden der Elektroden und der Metalloberfläche zumindest teilweise aus und schützt aufgrund ihrer geringen Wärmeleitfähigkeit die feuerfeste Ausmauerung des Ofens vor der Strahlungsenergie des Elektrolichtbogens. Die Strahlung des Elektrolichtbogens wird gegenüber der Wandung des Elektrolichtbogenofens stark reduziert und die Energleelnbrlngung in die metallische Schmelze verbessert.

Der durch Schaumschlacke umhülfte oder eingehüllte Elektrolichtbogen emittiert weniger Geräusche in die Umgebung, wodurch die Umgebungsbedingungen im Bereich des Ofens verbessert werden. Die Schaumschlacke verringert mechanische und thermische Spannungen an den Elektrodenspitzen und reduziert Wärmevertuste, Schall und Staubentwicklung werden während der Schmelz- und Überhitzungsperiode verringert,

Aus WO 2007/087979 A1 ist ein Verfahren zur Erzeugung einer Schaumschlacke in einer metallischen Schmelze in einem metallurgischen Ofen bekannt. Bei dem Verfahren wird ein Metalloxid und Kohlenstoff enthaltendes Gemisch in den Ofen eingegeben.

DE 10 2005 034409 offenbart ein Verfahren (und Vorrichtung) zur Messung der Höhe der Schaumschlacke in einem Elektrolichbogenofen, wobei die Schwingungen am Elektrolichbogenofen mit Körperschallsensoren gemessen und zur Auswertung weiter geleitet werden.

Aus EP 0637634 A1 ist ein Verfahren zum Herstellen einer Metallschmelze, insbesondere einer Stahlschmelze, in einem Elektrolichtbogenofen bekannt. Dabei wird die Badoberfläche während der Flachbadperioden mit einer Schaumschlacke bedeckt. Die Schichthöhe der Schaumschlacke wird so bemessen, dass sich die Schaumschlacke mindestens über den gesamten Elektrolichtbogen erstreckt. Die Pegelmessung erfolgt Ober eine optische Hochtemperaturmessmethode mit einer Hochtemperaturvideokamera oder einem Hochtemperaturradar.

Aus WO 2007/009924 A1 ist ein Verfahren zur Bestimmung mindestens einer Zustandsgröße eines Elektrolichtbogenofens mit mindestens einer Elektrode bekannt. Dabei wird die Energiezufuhr In den Eiaktrolichtbogenofen unter Zuhilfenahme

mindestens eines elektrischen Sensors ermittelt. Es werden Schwingungen am Elektrolichtbogenofen gemessen. Mindestens eine Zustandsgröße wird mit Hilfe einer Übertragungsfunktion bestimmt, die durch Auswertung der gemessenen Schwingungen und durch Auswertung von Messdaten des mindestens einen elektrischen Sensors ermittelt wird.

Um die vorgenannten Vorteile der Schaumschlacke zu erreichen, ist es dringend erforderlich, dass die Schaumschlacke immer in einer vorbestimmten Höhe im Elektrolichtbogenofen vorhanden ist. Es hat sich bei bekannten Verfahren gezeigt, dass die genaue Steuerung der Menge/Höhe der Schaumschlacke schwierig ist.

Der Erfindung liegt die Aufgabe zugrunde, ein verbessertes und zuverlässiges Verfahren sowie eine entsprechende Vorrichtung zur Steuerung oder Regelung der Schaumschlackenbildung bereitzustellen, damit eine optimale Menge/Höhe an Schaumschlacke im Elektrolichtbogenofen entsteht und erhalten bleibt.

Diese Aufgabe wird durch ein Verfahren gemäß Patentanspruch 1 gelöst. Es umfasst folgende Schritte:
Kontinuierliches Bestimmen der Größe der Schwingungsamplitude und/oder der Schwingungsfrequenz des Elektrolichtbogenofens, wobei die Schwingungsamplitude und/oder der Schwingungsfrequenz die Ist-Schichthöhe der Schaumschlacke in dem Elektrolichtbogenofen repräsentiert; Zugeben eines Gemisches, das mindestens ein Metalloxid und Kohlenstoff enthält, in den Elektrolichtbogenofen im Ansprechen auf die gemessene Schwingungsamplitude und/oder Schwingungsfrequenz so, dass eine gewünschte Soll-Schichthöhe (h) der Schaumschlacke (1) entsteht oder gehalten wird; und wobei die Größe der Schwingungsamplitude und/oder der Schwingungsfrequenz des Elektrolichtbogenofens durch Auswertung der gemessenen Schwingungen an mindestens einer Elektrode in dem Elektrolichtbogenofen z. B. mittels eines Laser-Doppler-Vibrometers, ermittelt wird.

Unterhalb der Schlacke wird das Metalloxid durch den Kohlenstoff reduziert. Die bei der Reduktion entstehenden Gase bilden in der Schlacke Blasen und die Schlacke wird aufgeschäumt.

Die Schichthöhe der Schaumschlacke wird gezielt auf einem gewünschten Niveau gehalten, wobei unter dem Bereich der Höhe ein zulässiger Toleranzrahmen für die Höhe der Schaumschlackenschicht zu verstehen ist.

Die Zugabe des Gemisches, das mindestens ein Metalloxid und Kohlenstoff enthält, kann dabei sowohl kontinuierlich als auch in vorgegebenen Zeitintervallen erfolgen.

Es wurde gefunden, dass optimale Bedingungen für die Schaumbildung herrschen, wenn die Zugabe des Gemisches mit einer Menge von 3 bis 20 kg pro Minute und pro Tonne metallischer Schmelze erfolgt, Besonders bevorzugt liegt die Zugabe zwischen 5 bis 15 kg pro Minute und pro Tonne metallischer Schmelze.

Als metallurgischer Ofen kommt zumeist ein Elektrolichtbogenofen oder ein Schmelzaggregat mit Elektroden zum Einsatz. Dabei ist vorgesehen, dass bei der im Wesentlichen kreisförmig ausgestalteten Wandung des Ofens und bei der im Wesentlichen zentralen Anordnung mindestens einer Elektrode des Ofens, die Zugabe des Gemisches auf eine Kreisringfläche zwischen den Elektroden und der Wandung erfolgt, Es hat sich als vorteilhaft erwiesen, wenn die Zugabe des Gemisches im Bereich der radialen Mitte der Kreisringfläche erfolgt.

Ein Gemisch kann zum Einsatz kommen, das neben dem Metalloxid und Kohlenstoff weiterhin ein Trägermaterial aus Eisen und/oder Chrom aufweist. Ferner kann es ein Bindematerial aufweisen. Die Handhabung des Gemisches wird erleichtert, wenn es Briketts oder Pellets enthält.

Materialien die die Bildung einer Schaumschlacke bewirken, sind im Allgemeinen Feststoffe wie Kohle, Koks, Holz, Eisencarbid, direkt reduzierendes Eisen (DRE), heissbrikettiertes Eisen (HBE), Erz, Filterstaub, Zunder, getrockneter und zerkleinerter Schlamm, Schlackenbildner, wie Kalk, Kalkstein, Dolomit, Flussspat, sowie Gemische davon und Gase, wie 02,Luft, N2, Erdgas und Kohlenwasserstoffe, H2O (Dampf) sowie Gemische davon.

Bei dem erfindungsgemäßen Verfahren wird die Menge an Schaumschlacke innerhalb gewünschter Grenzen, dem sogenannten Soll-E3and, gehalten, so dass die vorteilhafte Wirkung der Schaumschlacke optimiert eingesetzt werden kann. Der Begriff "Soli-Band" bezeichnet demnach In der Beschreibung zunächst einen optimalen Bereich für die Menge bzw. die Schichthöhe der Schlacke. Er bezeichnet aber gleichzeitig auch einen optimalen Bereich / eine optimale Bandbreite für die Amplitude oder Frequenz der Schwingungen des Elektrolichtbogenofens, welche die Schichthöhe der Schlacke repräsentierten.

Bei dem erfindungsgemäßen Verfahren wird die Größe der Schwingungsamplitude und/oder Schwingungsfrequenz des Elektrolichtbogenofens durch Auswertung der gemessenen Schwingungen an den Elektroden im Elektrolichtbogenofen mittels eines Laser-Doppler-Vibrometers kontinuierlich und berührungsfrei ermittelt.

Bei dem erfindungsgemäßen Verfahren werden alternativ Schwingungen gemessen, die von dem Elektrolichtbogen der Elektrode des Elektrolichtbogenofens ausgehen.

Ein Laser-Doppler-Vibrometer ist ein Messgerät zur Quantifizierung mechanischer Schwingungen. Dabei wird die Schwingungsfrequenz einer Elektrode gemessen. Laser-Doppler-Vibrometer enthalten einen Laser, der auf die zu messende Oberfläche der Elektrode bzw. Elektrodenarm fokussiert wird. Aufgrund des Doppler-Effekts verschiebt sich bei einer Bewegung der zu messenden Oberfläche der Elektrode die Frequenz des zurück gestreuten Laserlichts. Diese Frequenzverschiebung wird im Vibrometer mit Hilfe eines Interferometers ausgewertet und als Spannungssignal oder digitaler Datenstrom ausgegeben.

Ein Laser (Lichtverstärkung durch stimulierte Emission von Strahlung) ist eine künstliche gerichtete Strahlungsquelle. Der Doppiereffekt ist die Veränderung der gemessenen Frequenz von Schwingungen, während sich die Elektrode und der Laser-Doppler-Vibrometer einander nähem oder voneinander entfernen.

Nähert sich die Elektrode an das Laser-Doppter-Vibrometer, erhöht sich die vom Laser-Doppler-Vibrometer gemessene Frequenz, entfemt sich die Elektrode von dem Lasar-Doppler-Vibrometer, verringert sich die Frequenz.

Die Schichthöhe der Schaumschlacke im Elektrolichtbogenofen wird erfindungsgemäß mittels berührungsloser Schwingungsmessung der Elektroden während der Eiaktrolichtbogengestaltung ermittelt. Mit dem Laser-Doppler-Vibrometer werden Vibrationen der Elektrolichtbögen an den Elektroden indirekt und kontinuierlich erfasst.

Die Schichthöhe der Schaumschlacke bestimmt die Qualität der Schwingungen. Sind die Elektrolichtbögen mit Schaumschlacke umhülfk, reduzieren sich die Schwingungen und stabilisieren sich auf einem bestimmten Pegel. Durch diesen Effekt werden die thermischen und mechanischen Spannungen an den Elektrodenspitzen reduziert. Der Verbrauch der Elektroden wird dadurch verringert.

Der Unterschied in dem Signalverlauf bietet ein Ideales Kriterium für die Schäummaterialzugabe. Gemessen wird ein moduliertes Signal der Schwingung, daher die Amplitude und Frequenz. Nach einem weiteren Filterungsverfahren wird dieses Signal für die Schäummittelzugabe verwendet.

Die Schichthöhe der Schaumschlacke wird somit anhand einer kontinuierlichen Amplituden- und Fr9quenzmessung erfasst und dementsprechend die Zugabe des Schäummaterials gesteuert.

Beim erfindungsgemäßen Verfahren erfolgt beim Verlassen eines Soll-Bandes, weiches der kompletten Umhüllung des Elektrolichtbogens mit Schaumschlacke entspricht, die Zugabe des Gemisches mit einer höheren oder niedrigeren Geschwindigkeit.

Beim Abnehmen der Schwingungsamplitude und/oder Schwingungsfrequenz unterhalb des Soll-Bandes erfolgt die Zugabe des Gemisches mit einer niedrigeren Geschwindigkeit.

Beim Zunehmen der Schwingungsamplitude und/oder Schwingungsfrequenz Oberhalb des Soll-Bandes, erfolgt die Zugabe des Gemisches mit einer höheren Geschwindigkeit.

Beim Erreichen des Soll-Bandes wird die Zugabe des Gemisches reduziert oder gestoppt. Das Soll-Band wird vorher bestimmt und die Zugabe so gesteuert, dass die Schwingungsamplitude und/oder Schwingungsfrequenz sich möglichst im Soll-Band befindet.

Die Aufgabe der vorliegenden Erfindung wird weiter durch eine Vorrichtung zur Steuerung der Erzeugung einer Schaumschlacke in einer metallischen Schmelze gelöst, wobei eine gewünschte Schichthöhe der Schaumschlacke entsteht und/oder erhalten bleibt, Die Vorrichtung umfasst einen Elektrolichtboganofen mit mindestens einer Elektrode, mindestens einen Elektrolichtbogen, mindestens eine Zuführeinrichtung für ein Gemisch, das mindestens ein Metalloxid und Kohlenstoff enthält, und mindestens ein Laser-Doppler-Vibrameter, das vorzugsweise außerhalb des Elektrolichtbogenofens angebracht ist, zur Erfassung von Schwingungen des Elektrolichtbogenofens, welche die ist-Schichthöhe der Schlacke repräsentieren; und eine Steuer- oder Regelungseinrichtung zur Steuerung/Regelung der Schichthöhe der Schaumschlacke im Ansprechen auf die erfassten Schwingungen des Elektrolichtbogenofens.

Die Erfindung wird anhand einer Zeichnung weiter im Einzelnen erläutert. In der Zeichnung ist ein Ausführungsbeispiel der Erfindung dargestellt.

Es zeigt:
- Fig. 1: einen Elektrolichtbogenofen gemäß dem Schnitt A-B nach Fig. 2,
- Fig. 2: den Elektrolichtbogenofen gemäß dem Schnitt C-D nach Fig. 1.,
- Fig. 3: eine schematische Seitenansicht der Messung der Schwingungen einer Elektrode des Elektrolichtbogenofens mittels eines Laser- Doppler-Vibrometers,
- Fig. 4: ein Spektrum der Schwingungsmessung der Elektrode während der Schäummittelzugabe und
- Fig. 5: ein Spektrum der Schwingungsmessung der Elektrode während der Schäummitteizugabe,

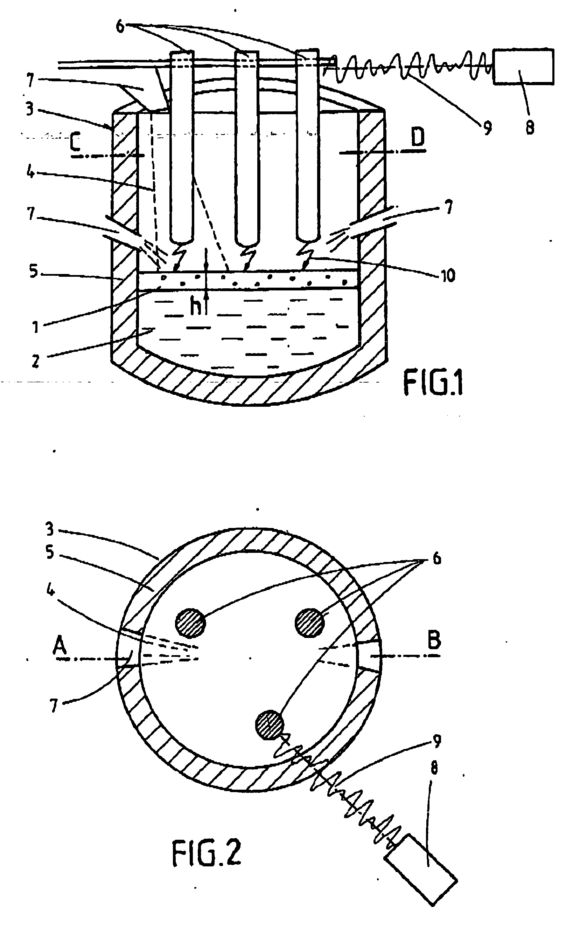

Der in den Figuren 1 und 2 dargestellte Elektrolichtbogenofen 3 dient zur Herstellung einer metallischen Schmelze 2 durch Aufschmelzen metallischen Guts. Auf der Schmelze 2 befindet sich eine Schicht aus Schlacke 1. Die Schlacke 1 soll aufgeschäumt werden, um die oben genannten Vorteile zu erzielen.

Über geeignete Zuführeinrichtungen 7 wird ein Gemisch 4, das mindestens ein Metalloxid und Kohlenstoff aufweist, beigegeben. Das Gemisch 4 kann weiter ein eisenhaltiges Trägermaterial sowie ein Bindematerial aufweisen. Das Gemisch 4 ist bevorzugt zu Briketts oder Pellets gepresst. Die gestrichelten Linien von den Zuführeinrichtungen 7 in Richtung zur Schmelze 2 sollen andeuten, wie die Pellets oder Briketts auf die Oberfläche der Schlacke 1 oder der Schmelze 2 abgeworfen werden.

Das spezifische Gewicht oder die Pressdichte des Gemisches 4 sind so gewählt, dass eine optimale Blasenbildung hinsichtlich der Stärke der Reaktion und der Dauer des Verfahrens erfolgt. Das Gemisch 4 hält sich aufgrund des spezifischen Gewichts nach der Eingabe in den Elektrolichtbogenofen 3 zwischen der metallischen Schmelze 2 und der Schaumschlacke 1 auf. Die Pellets oder Briketts des Gemisches 4 sinken zwar unter die Schaumschlacke 1 ab, schwimmen jedoch auf der metallischen Schmelze 2. Hinsichtlich dieser Zusammenhänge wird auf WO 2004/104232 A1 verwiesen, deren Inhalt Bestandteil der vorliegenden Anmeldung ist.

Wie in Fig. 1 zu sehen ist, weist die Schaumschlacke 1 eine Schichthöhe h auf, die auf einem gewünschten Soll-Wert oder in einem vorgegebenen Toleranzbereich gehalten wird. Um dies zu erreichen, wird gemäß der Spezifikation eine entsprechende Menge Gemisch 4, das mindestens ein Metalloxid und Kohlenstoff enthält, pro Zeit und bezogen auf die Masse der Schmelze 2 in den Elektrolichtbogenofien 3 eingebracht. Dies kann kontinuierlich oder in vorgegebenen Zeitintervallen erfolgen, In regelmäßigen Zeitabständen wird das Gemisch 4 in den Elektrolichtbogenofen 3 und damit auf die metallische Schmelze 2 eingebracht oder aufgebracht. Die Zugabe des Gemisches 4 hat eine chemische Reaktion zur Folge. Die Überlagerung aller Reaktionen führt zu einer Gesamtreaktion, die zu einer definierten Schichthöhe h der Schaumschlacke 1 führt. Die Schichthöhe h wird bevorzugt in einem Toleranzbereich gehalten. Die Zugabe des Gemisches 4 wird dabei so gewählt, dass möglichst eine kontinuierliche Blasenbildung gewährleisten ist

Das Gemisch 4 wird zwischen Schaumschlacke 1 und metallischer Schmelze 2 eingebracht. Pellets oder Briketts werden wegen der Temperatur-Differenz zwischen der Umgebung und der Schmelze mit einer Schale aus erstarrtem Metall umhüllt, wodurch der Schmelzprozess und die chemischen Reaktionen des Materials innerhalb der Schale verlaufen. Abhängig von der Temperaturdifferenz wird die Reaktion innerhalb der Schale vor oder nach dem Schmelzen der Schale oder später beendet. Im ersten Fall kann der Vorgang zum Platzen des Partikels führen, was eine explosionsartige Befreiung einer CO-Blase zur Folge hat im zweiten Fall wird sich die CO-Blase frei im Metall entwickeln.

Hierbei erfolgen beispielsweise folgende chemische Reaktionen:

(FeₓO_{y}) + y [C] → y {CO} + x [Fe]

(CaCO₃) → (CaO) + (CO₂)

Optimale Ergebnisse lassen sich erzielen, wenn zwischen 5 und 15 kg Gemisch 4 pro Tonne (1.000 kg) metallischer Schmelze 2 und pro Minute zugegeben werden.

Ein optimales Aufschdumergebnis wird erreicht, wenn zum einen die Geschwindigkeit der Zugabe des Gemisches 4, daher die Menge Gemisch 4 pro Zeit und pro Masse der metallischen Schmelze 2 günstig gewählt wird und wenn zum anderen die Verteilung des Gemisches 4 möglichst ringförmig auf die Oberfläche der Schlacke 1 oder metallischen Schmelze 2 erfolgt.

Damit wird eine gewünschte Schichthöhe h der Schaumschlacke 1 über der Zeit aufrecht erhalten, was den oben genannten vorteilhaften Effekt hat.

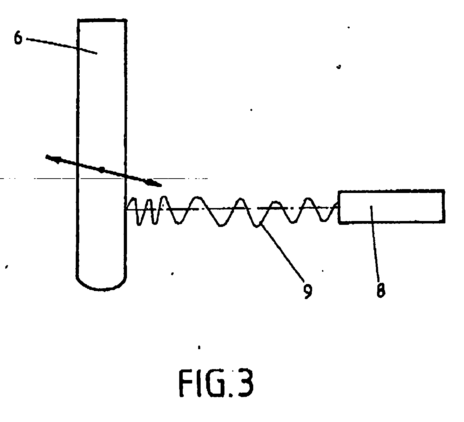

Fig. 3 ist eine Seitenansicht der Messung der Schwingungen einer Elektrode 6 des Elektrofichtbogenofens 3 mittels eines Laser-Doppler-Vibrometers 8. Es wird das Prinzip der Messung gezeigt, wie sie In Fig. 1 dargestellt wird. Dabei werden Vibrationen der Elektrolichtbögen 10 an den Elektroden 6 indirekt, berührungsfrei und kontinuierlich erfasst. Es wird die Schwingungsfrequenz einer Elektrode 6 gemessen. Ein Laser 8 wird vorzugsweise horizontal auf die zu messende Oberfläche der Elektrode 6 bzw. Elektrodenarm fokussiert. Aufgrund des Doppler-Effekts verschiebt sich bei einer Bewegung der zu messenden Oberfläche der Elektrode 6 die Frequenz des zurück gestreuten Laserlichts 9. Diese Frequenzverschiebung wird im Vibrometer 8 mit Hilfe eines Interferometers ausgewertet und als Spannungssignal oder digitaler Datenstrom ausgegeben.

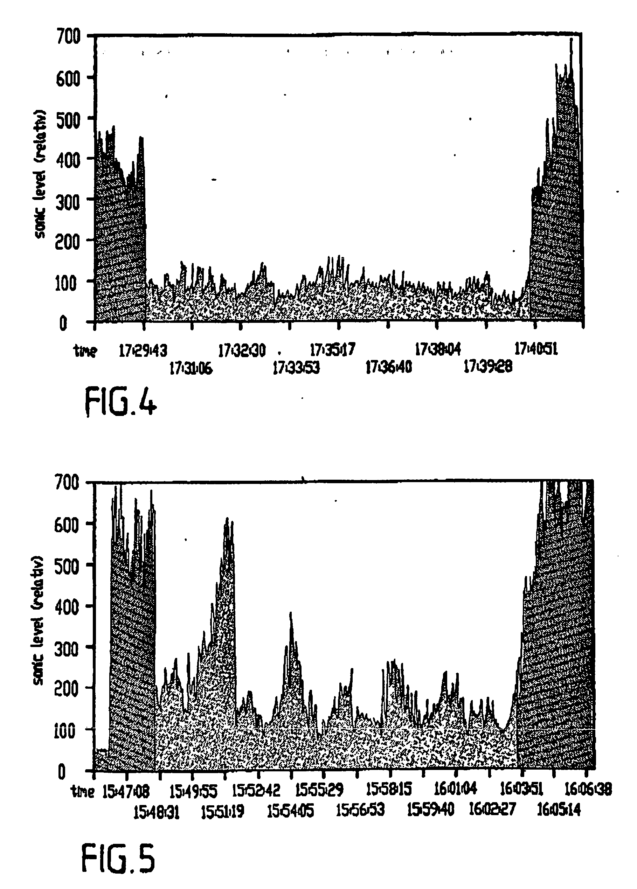

Fig. 4 und Fig. 5 zeigen Spektren der Schwingungsmessungen der Elektroden 6 während der Schäummittelzugabe (Gemisch 4). Aufgetragen wird die Intensität oder Amplitudenstärke auf der Y.Achse gegen die Zeit auf der X-Achse. Die Frequenz ergibt sich als Anzahl der Schwingungen pro Zeit. Es werden kontinuierlich Schwingungen der Elektroden 6 während der Schmelze 2 gemessen. Das ist an den dunkeln Schwingungen an den Rändern der Spektren gut erkennbar. Diese Schwingungen zeigen eine deutlich stärkere Intensität als die Schwingungen im zeitlichen Mittelbereich der Spektren. Im zeitlichen Mittelbereich der Spektren werden Schwingungen während der Schäummittelzugabe dargestellt. Das ist an den helleren Schwingungen im Mittelbereich der Spektren gut erkennbar. Dieser Bereich betrifft in Fig. 4 das Zeitintervall von etwa 17:29 Uhr bis etwa 17:40 Uhr und in Fig. 5 das Zeitintervall von etwa 15:48 Uhr bis etwa 16:03 Uhr. Das Zeitintervall für die Schäummittelzugabe beträgt somit etwa 10 Min bis etwa 20 Minuten.

Der Unterschied im Signalverlauf bietet ein ideales Kriterium für die Schäummittelzugabe. Es wird ein moduliertes Signal der Schwingungen, daher Amplitude und Frequenz gemessen. Das Signal wird weiter gefiltert und als gefiltertes Frequenzsignal Fm oder gefiltertes Amplitudensignal Am für die Schäummittelzugabe verwendet. Die Schichthöhe h der Schaumschlacke 1 wird somit anhand einer kontinuierlichen Amplituden- und Frequenzmessung erfasst und entsprechend die Zugabe des Schäummaterials gesteuert. Das Steuerungskriterium ist mit dem Amplituden/Frequenzband in der nachfolgenden Tabelle 1 dargestellt,

**Tabelle 1**

| Stufe | Frequenz | Amplitude | V_{b} | Vergleich V_{b} |
|---|---|---|---|---|
| 1 | Fₘᵢₙ ≤ Fₘ ≤ Fₘₐₓ | Aₘᵢₙ ≤ Aₘ ≤ Aₘₐₓ | V_{b} = V_{b1} | V_{b1} |
| 2 | Fₘ ≤ Fₘᵢₙ | Aₘ ≤ Aₘᵢₙ | V_{b} = V_{b2} | V_{b2} ≤ V_{b1} |
| 3 | Fₘₐₓ ≤ Fₘ | Aₘₐₓ ≤ Aₘ | V_{b} = V_{b3} | V_{b3} ≥ V_{b1} |

| | | | | |
|---|---|---|---|---|
| Fₘ - gefiltertes Frequenzmesssignal (1. Ordnung) Fₘᵢₙ - minimales Frequenzsignalpegel Fₘₐₓ - maximales Frequenzsignalpegel Aₘ - gefiltertes Amplitudenmesssignal (1, Ordnung) Aₘᵢₙ - minimales Amplitudensignalpegel Aₘₐₓ - maximales Amplitudensignalpegel V_{b} - Zugabegeschwindigkeit des Gemisches 4 (kg/min) V_{b1} - Soll-Zugabegeschwindigkeit des Gemisches 4 bei Stufe 1 V_{b2} - Soll-Zugabegeschwindigkeit des Gemisches 4 bei Stufe 2 V_{b3} - Soll-Zugabegeschwindigkeit des Gemisches 4 bei Stufe 3 | | | | |

Der Frequenz- und Amplhudenbereich der Stufe 1 (Fₘᵢₙ - Fₘₐₓ oder Aₘᵢₙ - Aₘₐₓ) entspricht dem sogenannten Soll-Band, das der kompletten Umhüllung des Eiektrolichtbogens 12 mit Schaumschlacke 1 entspricht. Sind die Elektrolichtbögen 12 mit Schaumschlacke 1 umhüllt, reduzieren sich die Schwingungen und stabilisieren sich auf einem bestimmten Pegel. Im Soll-Band erfolgt die Zugabe des Gemisches 4, das mindestens ein Metalloxid und Kohlenstoff enthält, mit einer Geschwindigkeit V_{b1}.

Beim Verlassen des Soll-Bandes, wie in der Stufe 2, mit Fₘ ≤ Fₘᵢₙ oder Aₘ ≤ Aₘᵢₙ erfolgt die Zugabe des Gemisches 4 es mit einer niedrigeren Geschwindigkeit (V_{b2} ≤ V_{b1}) bis zum erreichen des Soll-Bandes bei Fₘᵢₙ oder Aₘᵢₙ.

Beim Verlassen des Soll-Bandes, wie in der Stufe 3, mit Fₘₐₓ ≤ Fₘ oder Aₘₐₓ ≤ Am erfolgt die Zugabe des Gemisches 4 mit einer höheren Geschwindigkeit (V_{b3} ≥ V_{b1}) bis zum erreichen des Soll-Bandes bei Fₘₐₓ oder Aₘₐₓ.

### Bezugszeichenliste:

- 1.: Schlacke oder Schaumschlacke
- 2.: metallische Schmelze
- 3.: Elektrolichtbogenofen
- 4.: Gemisch
- 5.: Wandung
- 6.: Elektrode
- 7.: Zuführeinrichtung
- 8.: Laser-Doppler-Vbrometer
- 9.: Laserstrahl
- 10.: Elektrolichtbogen

- h: Schichthöhe der Schaumschlacke

## Patentansprüche

1. Verfahren zur Steuerung/Regelung der Erzeugung einer Schaumschlacke (1) in einer metallischen Schmelze (2) in einem Elektrolichtbogenofen (3), wobei das Verfahren die folgenden Schritte aufweist:
Kontinuierliches Bestimmen der Größe der Schwingungsamplitude und/oder der Schwingungsfrequenz des Elektrolichtbogenofens, wobei die Schwingungsamplitude und/oder der Schwingungsfrequenz die Ist-Schichthöhe der Schaumschlacke (1) in dem Elektrolichtbogenofen repräsentiert;
Zugeben eines Gemisches (4), das mindestens ein Metalloxid und Kohlenstoff enthält, in den Elektrolichtbogenofen (3) im Ansprechen auf die gemessene Schwingungsamplitude und/oder Schwingungsfrequenz so, dass eine gewünschte Soll-Schichthöhe (h) der Schaumschlacke (1) entsteht oder gehalten wird; und
wobei die Größe der Schwingungsamplitude und/oder Schwingungsfrequenz des Elektrolichtbogenofens durch Auswertung der gemessenen Schwingungen an mindestens einer Elektrode (6) in dem Elektrolichtbogenofen (3) mittels eines Laser-Doppler-Vibrometers (8), ermittelt wird.

2. Verfahren nach Anspruch 1,
wobei die Größe der Schwingungsamplitude und/oder der Schwingungsfrequenz des Elektrolichtbogenofens durch Auswertung der von einem Elektrolichtbogen (10) der Elektrode (6) des Elektrolichtbogenofens (3) ausgehenden Schwingungen ermittelt wird.

3. Verfahren nach einem der Ansprüche 1 bis 2,
wobei die Zugabe des Gemisches (4) mit einer höheren oder niedrigeren Geschwindigkeit erfolgt, wenn die gemessene Größe der Schwingungsamplitude und/oder der Schwingungsfrequenz des Elektrolichtbogenofens außerhalb eines Soll-Amplituden- oder Frequenz-Bandes liegt und deshalb die gemessene Ist-Schichthöhe (h) der Schaumschlacke (1) nicht mehr so groß ist, dass der Elektrolichtbogens (10) über seiner gesamten Höhe komplett mit Schaumschlacke (1) umhüllt ist.

4. Verfahren nach Anspruch 3,
wobei bei Abnahme der Schwingungsamplitude und/oder Schwingungsfrequenz unterhalb des Soll-Bandes, die Zugabe des Gemisches (4) mit einer niedrigeren Geschwindigkeit erfolgt.

5. Verfahren nach Anspruch 3,
wobei bei Zunahme der Schwingungsamplitude und/oder Schwingungsfrequenz oberhalb des Soll-Bandes, die Zugabe des Gemisches (4) mit einer höheren Geschwindigkeit erfolgt.

6. Verfahren nach einem der Ansprüche 1 bis 2,
wobei beim Erreichen des Soll-Bandes, die Zugabe des Gemisches (4) reduziert oder gestoppt wird.

7. Verfahren nach einem der Ansprüche 1 bis 6,
wobei die Zugabe des Gemisches (4) kontinuierlich erfolgt.

8. Verfahren nach einem der Ansprüche 1 bis 6,
wobei die Zugabe des Gemisches (4) in vorgegebenen Zeitintervallen erfolgt.

9. Verfahren nach einem der Ansprüche 1 bis 8,
wobei das Gemisch (4) zwischen die metallische Schmelze (2) und die Schlacke (1) eingebracht wird.

10. Verfahren nach einem der Ansprüche 1 bis 9,
wobei das Gemisch (4) weiterhin ein Trägermaterial aus Eisen und/oder Chrom aufweist.

11. Verfahren nach einem der Ansprüche 1 bis 10,
wobei das Gemisch (4) weiterhin ein Bindematerial aufweist.

12. Verfahren nach einem der Ansprüche 1 bis 11,
wobei das Gemisch (4) Briketts und/oder Pellets enthält.

13. Verfahren nach einem der Ansprüche 1 bis 12,
wobei unterhalb der Schlacke (1) das Metalloxid durch den Kohlenstoff reduziert wird und die bei der Reduktion entstehenden Gase in der Schlacke (1) Blasen bilden und die Schlacke (1) aufgeschäumt wird.

14. Vorrichtung zur Steuerung der Erzeugung einer Schaumschlacke (1) in einer metallischen Schmelze (2),
wobei eine gewünschte Schichthöhe (h) der Schaumschlacke (1) entsteht und/oder erhalten bleibt, umfassend
einen Elektrolichtbogenofen (3) mit mindestens einer Elektrode (6), mindestens einen Elektrolichtbogen (10),
mindestens eine Zuführeinrichtung (7) für ein Gemisch (4), das mindestens ein Metalloxid und Kohlenstoff enthält, und
mindestens ein Laser-Doppler-Vibrometer (8), das vorzugsweise außerhalb des Elektrolichtbogenofens (3) angebracht ist, zur Erfassung von Schwingungen des Elektrolichtbogenofens, welche die Ist-Schichthöhe der Schlacke repräsentieren; und
eine Steuer- oder Regelungseinrichtung zur Steuerung/Regelung der Schichthöhe (h) der Schaumschlacke (1) im Ansprechen auf die erfassten Schwingungen des Elektrolichtbogenofens.

15. Vorrichtung nach Anspruch 14,
wobei das Laser-Doppler-Vibrometer Schwingungen an den Elektroden (6) im Elektrolichtbogenofen (3) misst.

16. Vorrichtung nach Anspruch 14 oder 15,
wobei das Laser-Doppler-Vibrometer Schwingungen misst, die von dem Elektrolichtbogen (10) der Elektrode (6) ausgehen.

17. Verwendung eines Laser-Doppler-Vibrometers zur Messung von Schwingungen an den Elektroden im Elektrolichtbogenofen (3) und zur kontinuierlichen Bestimmung der Schichthöhe (h) der Schaumschlacke (1).

## Claims

1. Method of controlling/regulating the generation of a foamed slag (1) in a metallic melt (2) in an electric arc furnace (3), wherein the method comprises the following steps:
continuously determining the magnitude of the oscillation amplitude and/or the oscillation frequency of the electric arc furnace, wherein the oscillation amplitude and/or the oscillation frequency represents or represent the actual layer height of the foamed slag (1) in the electric arc furnace;
adding a mixture (4), which contains at least a metal oxide and carbon, to the electric arc furnace (3) in response to the measured oscillation amplitude and/or oscillation frequency so that a desired target layer height (h) of the foamed slag (1) arises or is maintained; and
wherein the magnitude of the oscillation amplitude and/or oscillation frequency of the electric arc furnace is determined by evaluation of the measured oscillations at at least one electrode (6) in the electric arc furnace (3) by means of a laser-Doppler vibrometer (8).

2. Method according to claim 1, wherein the magnitude of the oscillation amplitude and/or oscillation frequency of the electric arc furnace is determined by evaluation of the oscillations emanating from an electric arc (10) of the electrode (6) of the electric arc furnace (3).

3. Method according to one of claims 1 and 2, wherein the addition of the mixture (4) takes place at a higher or lower rate when the measured magnitude of the oscillation amplitude and/o oscillation frequency of the electric arc furnace lies outside a target amplitude or frequency range and accordingly the measured actual layer height (h) of the foamed slag (1) is no longer so large that the electric arc (10) is completely enclosed over its entire height by foamed slag (1).

4. Method according to claim 3, wherein the addition of the mixture (4) takes place at a lower rate when the oscillation amplitude and/or oscillation frequency drops or drop below the target range.

5. Method according to claim 3, wherein the addition of the mixture (4) takes place at a higher rate when the oscillation amplitude and/or oscillation frequency rises or rise above the target range.

6. Method according to one of claims 1 and 2, wherein the addition of the mixture (4) is reduced or stopped when the target range is reached.

7. Method according to any one of claims 1 to 6, wherein the addition of the mixture (4) takes place continuously.

8. Method according to any one of claims 1 to 6, wherein the addition of the mixture (4) takes place at predetermined intervals in time.

9. Method according to any one of claims 1 to 8, wherein the mixture (4) is introduced between the metallic melt (2) and the slag (1).

10. Method according to any one of claims 1 to 9, wherein the mixture (4) additionally comprises a carrier material of iron and/or chromium.

11. Method according to any one of claims 1 to 10, wherein the mixture (4) further comprises a binder material.

12. Method according to any one of claims 1 to 11, wherein the mixture (4) includes briquettes and/or pellets.

13. Method according to any one of claims 1 to 12, wherein the metal oxide is reduced by the carbon below the slag (1) and the gases, which arise during reduction, form bubbles in the slag (1) and the slag (1) is foamed up.

14. Device for controlling the generation of a foamed slag (1) in a metallic melt (2), wherein a desired layer height (h) of the foamed slag (1) arises and/or is maintained, comprising
an electric arc furnace (3) with at least one electrode (6),
at least one electric arc (10),
at least one feed device (7) for a mixture (4) containing at least a metal oxide and carbon, and
at least one laser-Doppler vibrometer (8), which is preferably mounted outside the electric arc furnace (3), for detecting oscillations of the electric arc furnace which represent the actual layer height of the slag; and
a controlling or regulating device for controlling/regulating the layer height (h) of the foamed slag (1) in response to the detected oscillations of the electric arc furnace.

15. Device according to claim 14, wherein the laser-Doppler vibrometer measures oscillations at the electrodes (6) in the electric arc furnace (3).

16. Device according to claim 14 or 15, wherein the laser-Doppler vibrometer measures oscillation emanating from the arc (10) of the electrode (6).

17. Use of a laser-Doppler vibrometer for measuring oscillations at the electrodes in the electric arc furnace (3) and for continuous determination of the layer height (h) of the foamed slag (1).

## Revendications

1. Procédé pour la commande/le réglage de la production d'un laitier mousseux (1) dans une masse fondue métallique (2) dans un four à arc électrique (3), dans lequel le procédé présente les étapes suivantes consistant à :
déterminer en continu la valeur de l'amplitude d'oscillation et/ou de la fréquence d'oscillation du four à arc électrique, l'amplitude d'oscillation et/ou la fréquence d'oscillation représentant la hauteur de couche réelle du laitier mousseux (1) dans le four à arc électrique ;
ajouter un mélange (4), qui contient au moins un oxyde métallique et du carbone, dans le four à arc électrique (3) en réponse à l'amplitude d'oscillation et/ou à la fréquence d'oscillation mesurée de telle sorte que l'on obtient ou que l'on maintient une hauteur de couche de consigne désirée (h) du laitier mousseux (1) ; et
dans lequel on détermine la valeur de l'amplitude d'oscillation et/ou de la fréquence d'oscillation du four à arc électrique par l'évaluation des oscillations mesurées sur au moins une électrode (6) dans le four à arc électrique (3) au moyen d'un vibromètre laser à effet Doppler (8).

2. Procédé selon la revendication 1, dans lequel on calcule la valeur de l'amplitude d'oscillation et/ou de la fréquence d'oscillation du four à arc électrique par l'évaluation des oscillations émanant d'un arc électrique (10) de l'électrode (6) du four à arc électrique (3).

3. Procédé selon l'une quelconque des revendications 1 à 2, dans lequel l'addition du mélange (4) a lieu à une vitesse supérieure ou inférieure, lorsque la valeur mesurée de l'amplitude d'oscillation et/ou de la fréquence d'oscillation du four à arc électrique se situe à l'extérieur d'une bande d'amplitude ou de fréquence de consigne, si bien que la hauteur de couche réelle mesurée (h) du laitier mousseux (1) n'est plus suffisamment élevée pour que l'arc électrique (10) recouvre le laitier mousseux (1) de manière complète sur toute sa hauteur.

4. Procédé selon la revendication 3, dans lequel lors d'une diminution de l'amplitude d'oscillation et/ou de la fréquence d'oscillation en dessous de la bande de consigne, on procède à l'addition du mélange (4) à une vitesse inférieure.

5. Procédé selon la revendication 3, dans lequel lors d'une augmentation de l'amplitude d'oscillation et/ou de la fréquence d'oscillation au-dessus de la bande de consigne, on procède à l'addition du mélange (4) à une vitesse supérieure.

6. Procédé selon l'une quelconque des revendications 1 à 2, dans lequel, lorsqu'on atteint la bande de consigne, on réduit ou on arrête l'addition du mélange (4).

7. Procédé selon l'une quelconque des revendications 1 à 6, dans lequel l'addition du mélange (4) a lieu en continu.

8. Procédé selon l'une quelconque des revendications 1 à 6, dans lequel l'addition du mélange (4) a lieu à des intervalles de temps prédéfinis.

9. Procédé selon l'une quelconque des revendications 1 à 8, dans lequel le mélange (4) est introduit entre la masse fondue métallique (2) et le laitier (1).

10. Procédé selon l'une quelconque des revendications 1 à 9, dans lequel le mélange (4) présente en outre une matière de support constituée de fer et/ou de chrome.

11. Procédé selon l'une quelconque des revendications 1 à 10, dans lequel le mélange (4) présente en outre une matière faisant office de liant.

12. Procédé selon l'une quelconque des revendications 1 à 11, dans lequel le mélange (4) contient des briquettes et/ou des granulés.

13. Procédé selon l'une quelconque des revendications 1 à 12, dans lequel, en dessous du laitier (1), l'oxyde métallique est soumis à une réduction par le carbone et les gaz qui se dégagent lors de la réduction forment des bulles dans le laitier et transforment le laitier (1) en mousse.

14. Dispositif pour la commande de la production d'un laitier mousseux (1) dans une masse fondue métallique (2), dans lequel on obtient et/ou on maintient une hauteur de couche désirée (h) du laitier mousseux (1), comprenant :
un four à arc électrique (3) comprenant au moins une électrode (6) ;
au moins un arc électrique (10) ;
au moins un mécanisme d'amenée (7) pour un mélange (4) qui contient au moins un oxyde métallique et du carbone ; et
au moins un vibromètre laser à effet Doppler (8) qui est appliqué de préférence à l'extérieur du four à arc électrique (3), pour l'enregistrement des oscillations du four à arc électrique qui représentent la hauteur de couche réelle du laitier ; et
un mécanisme de commande ou de réglage pour la commande/le réglage de la hauteur de couche (h) du laitier mousseux (1) en réponse aux oscillations enregistrées du four à arc électrique.

15. Dispositif selon la revendication 14, dans lequel le vibromètre laser à effet Doppler mesure les oscillations aux électrodes (6) dans le four à arc électrique (3).

16. Dispositif selon la revendication 14 ou 15, dans lequel le vibromètre laser à effet Doppler mesure les oscillations qui émanent de l'arc électrique (10) de l'électrode (6).

17. Utilisation d'un vibromètre laser à effet Doppler pour la mesure des oscillations aux électrodes dans le four à arc électrique (3) et pour la détermination en continu de la hauteur de couche (h) du laitier mousseux (1).
